Europäisches Patentamt

European Patent Office

Office européen des brevets

(19)

(11) Veröffentlichungsnummer : **0 120 189**
**B1**

# (12) EUROPÄISCHE PATENTSCHRIFT

(45) Veröffentlichungstag der Patentschrift :
29.07.87

(21) Anmeldenummer : 84100351.0

(22) Anmeldetag : 14.01.84

(51) Int. Cl.⁴ : **B 60 K 41/06**

(54) Kontrolleinrichtung für ein Fahrzeuggetriebe zur Überprüfung des maximalen Momentes.

(30) Priorität : 26.03.83 DE 3311295

(43) Veröffentlichungstag der Anmeldung :
03.10.84 Patentblatt 84/40

(45) Bekanntmachung des Hinweises auf die Patenterteilung : 29.07.87 Patentblatt 87/31

(84) Benannte Vertragsstaaten :
AT CH DE FR GB IT LI NL SE

(56) Entgegenhaltungen :
EP-A- 0 007 881
EP-A- 0 111 636
DE-A- 2 836 082
DE-A- 2 852 195
DE-A- 3 018 032
DE-A- 3 101 056
DE-A- 3 240 236
DE-A- 3 246 201
FR-A- 2 435 635
GB-A- 2 053 387
(73) Patentinhaber : WABCO Westinghouse Fahrzeugbremsen GmbH
Am Lindener Hafen 21 Postfach 91 12 80
D-3000 Hannover 91 (DE)

(72) Erfinder : Der Erfinder hat auf seine Nennung verzichtet

(74) Vertreter : Schrödter, Manfred
WABCO Westinghouse Fahrzeugbremsen GmbH Am
Lindener Hafen 21 Postfach 91 12 80
D-3000 Hannover 91 (DE)

**Beschreibung**

Die Erfindung bezieht sich auf eine Kontrolleinrichtung für ein von einem Motor über ein abgestuftes Getriebe angetriebenes Fahrzeug gemäß dem Oberbegriff des Patentanspruchs 1.

Beim manuellen Schalten eines Getriebes für ein Fahrzeug, insbesondere für ein Straßen-Nutzfahrzeug, kommt es vor, daß das Drehmoment im neu eingelegten Gang nicht ausreicht, um das Fahrzeug in der vor dem Gangwechsel vorhandenen Geschwindigkeit weiterfahren zu lassen. Es muß dann wieder zurückgeschaltet werden. Das Einschätzen und Voraussehen einer solchen Situation durch den Fahrzeug-Führer ist schwierig und ungenau. Falsche Gangwechsel bedeuten jedoch, daß das Fahrzeug unwirtschaftlich, insbesondere mit zu hohem Kraftstoff-Verbrauch gefahren wird.

Die beschriebenen Situationen können auch bei automatisch arbeitenden Getrieben auftreten. Diese Getriebe sind deshalb so ausgelegt, daß nur bei hoher Leistungsreserve geschaltet wird. Dies bedeutet ebenfalls eine unwirtschaftliche Fahrweise.

Die Auswahl des günstigsten Betriebspunktes einer aus einem Motor und einem Getriebe bestehenden Antriebseinheit ist von sehr vielen Faktoren abhängig. Selbst die Definition des « günstigsten Betriebspunktes » ist sehr schwierig, da der Punkt günstigsten Verbrauchs im Kennlinienfeld eines Motors in der Regel nicht der Punkt maximaler Leistung ist. Je nach Anforderungen und äußeren Bedingungen müssen die Gangauswahlkriterien zwischen den verschiedenen als « günstig » eingestuften Betriebspunkten variiert werden.

Die Qualität dieser Kriterien ist ganz entscheidend auch von der Konstanz der verwendeten Größen abhängig. Werden beispielsweise Motormomente ermittelt, dann sind diese unter anderem abhängig von der Kraftstoffdichte, von der Höhenlage, in der der Motor betrieben wird, von der Kraftstoffqualität, von der Motortemperatur usw. Werden nun die Motormomente mit nach theoretischen oder empirischen Methoden ermittelten konstanten Werten verglichen, dann wird das Ergebnis bei Auftreten einer Abweichung eines der vielen Einflußfaktoren einen Fehler aufweisen.

Eine naheliegende Lösung ist es nun, möglichst viele der wichtigsten Einflußgrößen mit eigenen Sensoren zu erfassen und auszuwerten. Das bedeutet aber einen großen Aufwand.

Auch die Genauigkeit, mit der ein Wert ermittelt wird, ist bei der Ermittlung von Schaltpunkten, insbesondere bei mit großen Last-/Leerverhältnis betriebenen Nutzfahrzeugen von entscheidender Bedeutung. Sollen beispielsweise die bei konstanter Geschwindigkeit am Fahrzeug auftretenden Fahrwiderstände genau ermittelt werden, dann müßten Größen wie Veränderungen des Luftwiderstands-beiwertes $C_W$ durch Aufbauänderungen, Luftdichte, Änderung der Rollreibung der Reifen auf der Straße bei unterschiedlichen Reitenprofilen und unterschiedlichem Verschleißzustand, Straßenprofil usw. erfaßt werden. Hinzu kommt, daß bestimmte Größen wie Lagerreibung und Getriebe-Wirkungsgrad sich an Serienfahrzeugen ohne großen Aufwand nicht ermitteln lassen.

Der Erfindung liegt die Aufgabe zugrunde, genaue Schaltpunkte für ein Fahrzeug-Getriebe zu ermitteln, wobei möglichst wenig Peripherie-Geräte (Sensoren) eingesetzt werden sollen. Insbesondere soll festgestellt werden, ob das Antriebsmoment im neuen Gang ausreicht, um das Fahrzeug mit gleichbleibender Geschwindigkeit weiterfahren zu lassen.

Diese Aufgabe wird von der im Patentanspruch 1 angegebenen Erfindung gelöst. Vorteilhafte Ausführungsbeispiele und Weiterbildungen der Erfindung sind in den Unteransprüchen angegeben.

Die Merkmale a) bis c) des Anspruchs 1, mit denen die Gewichtsermittlung erfolgt, sind bereits in der EP-A-111 636 Gemäß Art. 54(3) enthatten.

Die Erfindung geht von der folgenden Erkenntnis aus : Zu jedem beliebigen Zeitpunkt setzt sich das fahrzeugantreibende momentane Antriebsmoment $M_A$ aus einem stationären Antriebsmoment $M_{stat}$, daß zur Weiterfahrt des Fahrzeugs ohne Beschleunigung oder Verzögerung des Fahrzeugs erforderlich ist, und einem eine Beschleunigung oder Verzögerung des Fahrzeugs bewirkenden Beschleunigungsmoment $M_b$ zusammen. Dies bedeutet, daß das stationäre Antriebsmoment $M_{stat}$ wie folgt berechnet werden kann :

$$M_A = {}_{stat} + M_b,$$
$$M_b = G \cdot f\,(\ddot{s}),$$
$$M_{stat} = M_A - G \cdot f\,(\ddot{s}),$$

wenn die Größen $M_A$, G und $\ddot{s}$ vorliegen bzw. gemessen werden können. Im einzelnen bedeuten

$$M_{stat} = \text{stationäres Antriebsmoment}$$
$$M_A = \text{momentanes Antriebsmoment}$$
$$M_b = \text{Beschleunigungsmoment}$$
$$G = \text{Gewicht des Fahrzeugs}$$
$$\ddot{s} = \text{Beschleunigung des Fahrzeugs}$$

Der Ausdruck $f(\ddot{s})$ bedeutet, daß die Fahrzeug-Beschleunigung mit einem Faktor versehen sein kann. Alle Größen können aus den tatsächlichen Werten abgeleitet sein.

Das stationäre Moment $M_{stat}$ kann als die Summe der Fahrwiderstände bei geschwindigkeitskonstanter Fahrt aufgefaßt werden. Diese Fahrwiderstände sind die Rollreibung, die Luftreibung und der Steigungswiderstand.

Da die in der Formel für $M_{stat}$ stehenden Größen leicht ermittelt werden können, läßt sich die umständliche und ungenaue Erfassung der einzelnen Fahrwiderstände umgehen.

Das zur Auswertung der Gleichung für $M_{stat}$ notwendige genaue Fahrzeug-Gewicht kann über die Fahrzeug-Beschleunigung, wie in der EP-A-111 636 beschrieben, bestimmt werden. Wesentlich ist, daß das genaue Gewicht bekannt ist, und nicht von einem angenommenen Fahrzeuggewicht (z. B. DE-A 30 18 032, DE-A 31 01 056) ausgegangen wird.

In der DE-A 30 18 032 werden in Gleichungszusammenhängen die Fahrzustände beschrieben, und Annahmen über Werte von Fahrwiderständen, Teile von Fahrwiderständen und die Masse des Fahrzeugs eingeführt. Die Verwendung von physikalischen Zusammenhänge beschreibenden Gleichungen, in die angenommene Größen eingeführt werden, kann die Möglichkeit bieten, die angenommenen Größen so umzuformen, daß sich daraus weitere Größen ergeben, die einen gewissen Nutzen bringen. Der Anwendungsbereich dieser Größen ist auf bestimmte Fahrsituationen abgestimmt. Außerdem müssen die Werte, mit denen diese Größen verglichen werden, auf empirische Weise angepaßt werden, um Verfälschungen auszuscheiden. Beispielsweise bei Nutzfahrzeugen, die üblicherweise ein sehr großes Last-Leerverhältnis aufweisen und stark untermotorisiert sind, würde eine solche Schaltung in weiten Bereichen unzureichende Ergebnisse liefern.

Um einen sinnvollen, unverfälschten Regel- oder Steuereingriff machen zu können, ist es außerdem wichtig, zu ermitteln, woher beispielsweise eine zu kleine Fahrzeugbeschleunigung kommt. Dies kann am Fahrzeuggewicht, an der gerade vorliegenden Steigung oder an beidem liegen.

Demgegenüber werden in der vorgeschlagenen Schaltung die Größen annahmenfrei und damit genauer bestimmt. Dieses bedingt, daß es sich dabei um ein größeres Formelsystem in ganz spezifischer Anordnung und ganz spezifischen Zusammenhängen handelt. Es ist dabei zweckmäßig, die Motormomente über ein Motor-Kennlinienfeld zu ermitteln und die Schwellwerte auf diese Größen zu beziehen, um damit Störeinflüsse von außen auf den Motor auszuschalten.

Insbesondere die Frage, ob das maximale oder maximal zuträgliche Motormoment in einem neu zu wählenden Gang überschritten wird, ist nur sinnvoll zu beantworten, wenn die einzelnen Größen genau ermittelt werden können.

Weiterhin wird nach der erfindungsgemäßen Ausgestaltung für die Berechnung möglichst aller erforderlichen Größen von einmal festgelegten Werten ausgegangen.

Im vorgeschlagenen Fall wird das unter bestimmten Betriebsbedingungen ermittelte Kennlinienfeld des verwendeten Motors, in dem Motorausgangsmoment über Motordrehzahl bei verschiedenen Motorsteuerbetriebspunkten aufgetragen sind, in einem Speicher abgelegt. Die theoretisch oder empirisch ermittelten maximal fahrbaren Momentenlinien und Rundlaufgrenzwerte, die zur Erstellung von Schaltkriterien mit beispielsweise dem Wert $M_{stat}$ verglichen werden, beziehen sich ebenfalls auf die Werte des gespeicherten Kennlinienfeldes. Diese Vorgehensweise hat den Vorteil, daß sich bei Verschiebungen des Kennlinienfeldes, z. B. durch veränderte Kraftstoffdichte oder veränderter Höhenlage, das Verhältnis der Größen bei den beschriebenen Wertevergleichen nicht ändert und somit fehlerfreie Werte geliefert werden.

Würde das Motormoment beispielsweise direkt gemessen und mit theoretisch oder empirisch festgelegten Werten verglichen werden, dann müßte bei Veränderung des Motormomentes durch äußere Einflüsse eine Korrektur der Werte vorgenommen werden, um ein fehlerfreies Ergebnis zu bekommen.

Ein Vergleich von theoretisch oder empirisch ermittelten Momenten mit dem stationären Moment $M_{stat}$ mit vorgegebenen Werten hat folgenden Vorteil :

Wenn vor dem Einlegen eines neuen Ganges geprüft wird, ob das im neuen Gang erzielbare maximale oder zuträgliche Antriebsmoment (z. B. Begrenzung des Antriebsmomentes durch Rundlaufgrenze) größer ist als das entsprechend dem Getriebe-Übersetzungsverhältnis transformierte stationäre Antriebsmoment, so läßt sich vorhersagen, wie sich das Fahrzeug nach einem Gangwechsel weiterbewegen wird, d. h. ob es sich überhaupt mit der vor dem Gangwechsel vorhandenen Geschwindigkeit weiterbewegt. Gegebenenfalls wird über eine Sperreinrichtung das Einlegen eines insofern ungünstigen Ganges verhindert.

Der erwähnte Vergleich zwischen dem transformierten stationären Antriebsmoment und dem maximalen oder zuträglichen Antriebsmoment des neuen Ganges läßt auch eine Vorhersage über die evtl. zu erwartende Beschleunigung des Fahrzeugs nach dem Gangwechsel zu.

Unter dem Motor-Kennlinienfeld sind auch Kennlinienfelder zu verstehen, die den Betriebszustand des Motors indirekt beschreiben, wie beispielsweise die Zahlenwerte der Kraftstoffeinspritzzeiten.

Weiterhin sind unter den in den Ansprüchen verwendeten Begriffen « Moment » Antriebsgrößen allgemein zu verstehen, also z. B. auch Leistungsgrößen oder solche vergleichbaren Größen, die die Antriebsmomente lediglich als eine von mehreren Rechengrößen enthalten.

Die Erfindung wird anhand eines Ausführungsbeispiels, das in der Zeichnung dargestellt ist, und eines Diagramms näher erläutert.

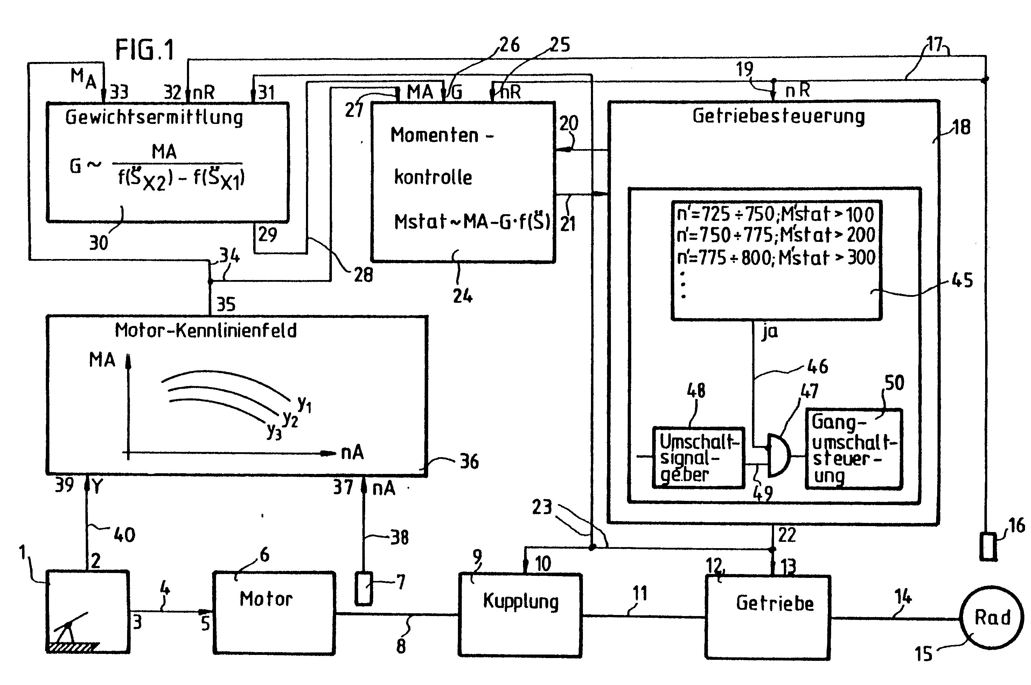

Die Zeichnung nach Figur 1 zeigt in vereinfachter Darstellung die wesentlichen Elemente eines von einer Antriebsmaschine angetriebenen Fahrzeugs. Als Antriebsmaschine dient ein Verbrennungsmotor 6,

**0 120 189**

dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist. Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motos 6 verbunden ist. Der Geber 1 ist ferner mit einer Einrichtung versehen, die die Stellung des Gebers 1 als Signalgröße (Motor-Steuergröße) y darstellt. Diese Signalgröße y ist an einem Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch — wie im dargestellten Ausführungsbeispiel — als elektrischer oder elektronischer Geber ausgebildet sein, wenn der Motor 6 entsprechend mittels eines Steuersignals steuerbar ist.

Die zwischen der antriebsseitigen Welle 8 und der abtriebsseitigen Welle 11 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei Signaleingänge 13 des Getriebes 12 zum Empfang entsprechender Steuersignale zum Einlegen des jeweils gewünschten oder erforderlichen Ganges dienen. Sowohl die Kupplung 9 als auch das Getriebe können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

Zur Steuerung des Getriebes 12 ist eine Getriebesteuerung 18 vorgesehen. Im einfachsten Fall arbeitet diese Getriebesteuerung 18 so, daß das Getriebe 12 in Abhängigkeit von der Geschwindigkeit des Fahrzeugs und somit in Abhängigkeit von der Drehzahl $n_R$ der angetriebenen Räder automatisch geschaltet wird. Zur Erfassung der Drehzahl $n_R$ des angetriebenen Rades 15 dient ein Sensor 16, dessen Drehzahl-Signal über eine Signalleitung 17 einem Signaleingang 19 der Getriebesteuerung 18 zugeführt ist. Über Signalausgänge 22 und entsprechende Signalleitungen 23 ist die Getriebesteuerung 18 mit den Signaleingängen 13 des Getriebes 12 und dem Signaleingang 10 der Kupplung 9 verbunden.

Wenn mittels der Getriebesteuerung 18 in Abhängigkeit von der Geschwindigkeit des Fahrzeugs und unter Berücksichtigung vorgegebener Auswahlkriterien ein neuer Gang festgelegt wird, wird die Kupplung 9 über ihrer Signaleingang 10 betätigt und anschließend bei getrennter Kupplung das Getriebe 12 über seine Signaleingängen 13 von der Getriebesteuerung 18 umgeschaltet. Danach wird dann die Kupplung 9 wieder geschlossen. Die Steuerung bzw. Betätigung der Kupplung 9 und des Getriebes 12 können — wie oben angedeutet — auch rein mechanisch über Servomotoren der Getriebesteuerung 18 erfolgen.

Zu den vorstehend erwähnten Auswahlkriterien, nach denen in der Getriebsteuerung 18 jeweils ein neuer Gang festgelegt wird, gehört im dargestellten Ausführungsbeispiel eine Überprüfung, ob der Motor 6 nach dem Einlegen des an sich ausgewählten neuen Ganges in der Lage ist, das für eine Weiterfahrt des Fahrzeugs ohne Verzögerung erforderliche stationäre Antriebsmoment aufzubringen. Dies bedeutet, daß der dem an sich ausgewählten neuen Gang zugeordnete Antriebsmomenten-Bereich größere Werte bzw. einen größeren Wert aufweisen müssen als das für die verzögerungsfreie Weiterfahrt des Fahrzeugs erforderliche stationäre Antriebsmoment $M_{stat}$.

Für den erwähnten Vergleich zwischen dem jeweils stationären Antriebsmoment $M_{stat}$ und dem für den an sich ausgewählten neuen Gang maximal vorhandenen oder (z. B. durch Unterschreitung der Rundlaufgrenze) zuträglichen Antriebsmoment ist eine Vergleichseinrichtung 45 vorgesehen, die in die Getriebesteuerung 18 integriert ist. Ebenfalls in die Getriebesteuerung 18 integriert ist eine Einrichtung, die die Werte der Linien der maximalen Antriebsmomente und der Rundlaufgrenze speichert. Es versteht sich, daß bei dem erwähnten Vergleich der Antriebsmomente nicht das jeweilige stationäre Antriebsmoment direkt mit dem angemessenen Antriebsmoment des betreffenden neuen Ganges verglichen wird, sondern daß bei diesem Vergleich das stationäre Antriebsmoment entsprechend dem Übersetzungsverhältnis zwischen dem jeweils eingeschalteten und dem betreffenden neuen Gang transformiert wird. Aus diesem Grunde ist im dargestellten Ausführungsbeispiel als Vergleichgröße $M'_{stat}$ statt $M_{stat}$ angegeben. Es ist auch möglich, statt des stationären Antriebsmomentes bzw. deren gemäß dem übersetzungsverhältnis des Getriebes transformierten Werte, von den Antriebsmomenten abgeleitete Größen wie z. B. Kräfte, Leistungen oder solche Vergleichsgrößen, die die Antriebsmomente lediglich als eine von mehreren Rechengrößen enthalten, miteinander zu vergleichen.

In der Vergleichseinrichtung 45 sind die Werte der Linien der maximalen Antriebsmomente und der Rundlaufgrenze bestimmten Drehzahlbereichen zugeordnet. So ist beispielsweise der Momentenwert 100 einem Drehzahlbereich von $n' = 725 — 750$ zugeordnet usw. Der Vergleich wird dann so durchgeführt, daß zunächst geprüft wird, in welchem Drehzahlbereich $n'$ die Drehzahl im neuen Gang liegen würde, und anschließend wird der zugeordnete maximale Momentenwert mit dem stationären Antriebsmoment $M'_{stat}$ im neuen Gang verglichen, beispielsweise nach dem Kriterium $M'_{stat} > 100$. Ist das Kriterium erfüllt, wird über die Signalleitung 46 ein Sperrsignal auf ein Sperrelement 47 gegeben. Dies bewirkt, daß ein vom Umschaltsignalgeber 48 über die Signalleitung 49 an eine Gangschaltsteuerung 50 abgegebenes Signal im Sperrelement 47 gesperrt wird und damit kein Umschalten in einen anderen

4

Gang erfolgt.

Alle in der Vergleichseinrichtung 45 gespeicherten Werte der Linien der maximalen Antriebsmomente und der Rundlaufgrenze beziehen sich immer auf die in einem Motor-Kennfeldspeicher 36 abgelegten Werte.

Für die Berechnung oder Bestimmung des stationären Antriebsmomentes oder einer daraus abgeleiteten stationären Antriebsgröße ist eine Momenten-Kontrolleinrichtung 24 vorgesehen, die die für den oben erwähnten Vergleich erforderliche stationäre Antriebsgröße (z. B. $M_{stat}$ oder $M'_{stat}$) über Signalleitungen 21 an die Getriebesteuerung 18 liefert, sofern die Getriebesteuerung 18 über Abfrage-Signalleitungen 20 die entsprechende Größe abfragt. Damit ist gewährleistet, daß die Getriebesteuerung 18 nach der Auswahl eines oder mehrerer gemäß der Drehzahl $n_R$ des Rades 15 an sich zulässiger neuer Gänge für jeden dieser Gänge den Vergleich zwischen dem erforderlichen stationären Antriebsmoment und dem dem betreffenden neuen Gang angemessenen Antriebsmoment vornimmt. Das Ergebnis dieses Vergleiches ist dann, daß der z. B. verbrauchsgünstigste neue Gang ausgewählt wird, der das Fahrzeug in jedem Fall so antreibt, daß es wenigstens ohne nennenswerte Verzögerung weiterfährt, oder daß kein neuer Gang eingelegt wird, weil in keinem der an sich ausgewählten neuen Gänge eine Weiterfahrt des Fahrzeugs ohne nennenswerte Verzögerung gewährleistet ist.

In der Momenten-Kontrolleinrichtung 24 wird das jeweilige stationäre Antriebsmoment $M_{stat}$ dadurch bestimmt, daß die Differenz zwischen dem tatsächlich vom Motor 6 aufgebrachten jeweiligen momentanen Antriebsmoment $M_A$ des Fahrzeugs und einer solchen Rechengröße bestimmt wird, die sich als das Produkt aus dem Gewicht des Fahrzeugs und dem Rechenwert der momentanen Beschleunigung des Fahrzeugs ergibt. Um die erwähnte Differenz berechnen zu können, werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Signaleingang 27 der Momenten-Kontrolleinrichtung 24 ist über eine Leitung 34 an den Signalausgang 35 des Motor-Kennfeldspeichers 36 angeschlossen, der an dem erwähnten Signalausgang 35 ein dem momentanen Antriebsmoment des Motors 6 entsprechendes Signal zur Verfügung stellt. Der Signaleingang 26 der Momenten-Kontrolleinrichtung 24 ist über eine Signalleitung 28 mit dem Signalausgang 29 einer Auswerteeinrichtung (Gewichtsermittlung) 30 zur Ermittlung des Gewichts des Fahrzeugs angeschlossen. An diesem Signalausgang 29 der Auswerteeinrichtung 30 steht ein dem Gewicht des Fahrzeugs entsprechendes Signal zur Verfügung. Der Signaleingang 25 der Momenten-Kontrolleinrichtung 24 ist über die Signalleitung 17 mit dem sensor 16 zur Erfassung der Rad-Drehzahl $n_R$ verbunden. In der Momenten-Kontrolleinrichtung 24 wird durch Differenzierung aus dem zeitlichen Verlauf der Drehzahl $n_R$ des Rades 15 die Beschleunigungsgröße $\ddot{s}$ des Fahrzeugs berechnet. Das jeweilige momentane Antriebsmoment $M_A$ des Motors 6 wird aus dem Motor-Kennfeldspeicher 36 ermittelt, welches die Abhängigkeit der folgenden Größen voneinander enthält : momentanes Antriebsmoment $M_A$ des Motors 6, drehzahl $n_A$ des Motors 6 und signalgröße y des Gebers (Gaspedal) 1. Im dargestellten Ausführungsbeispiel enthält der Speicher 36 für verschiedene Werte ($Y_1$, $Y_2$, $Y_3$) der Signalgröße y des Gebers 1 je eine Kennlinie für die Abhängigkeit des momentanen Antriebsmoments $M_A$ von der Drehzahl $n_A$.

Die Signalgröße y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt. Der Speicher 36 ist so ausgebildet, daß er für jedes Wertepaar $y/n_A$ das momentane Antriebsmoment $M_A$ an seinem Signalausgang 35 zur Verfügung stellt. Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der bereits in der älteren EP-A-111 636 beschriebenen Gewichtsermittlung 30 zur Ermittlung des Gewichtes des Fahrzeuges wird das Verhältnis zwischen dem momentanen Antriebsmoment $M_A$ des Motors 6 und einer Differenz zweier Rechengrößen gebildet, wobei die erwähnten Rechengrößen jeweils eine der Beschleunigung des Fahrzeugs entsprechende Beschleunigungsgröße enthalten. Diese beiden Beschleunigungsgrößen $\ddot{s}_{x2}$ und $\ddot{s}_{x1}$ werden zu verschiedenen Zeiten ermittelt, wobei die eine Beschleunigungsgröße zu einem Zeitpunkt ermittelt wird, in dem das Fahrzeug dem Antrieb durch den Motor 6 unterliegt, und wobei die andere Beschleunigungsgröße zu einem Zeitpunkt ermittelt wird, in dem sich das Fahrzeug in einem antriebslosen Zustand, z. B. in einer Schaltpause, befindet. In diesem antriebslosen Zustand wird das Fahrzeug nicht wesentlich beschleunigt oder verzögert.

Um die erwähnten Rechenoperationen durchführen zu können, wird der Gewichtsermittlung 30 über die Signalleitung 34 und einen Signaleingang 33 das momentane Antriebsmoment $M_A$ des Motors 6 zugeführt. Der zur Bildung der Beschleunigungsgrößen $\ddot{s}_{x2}$ und $\ddot{s}_{x1}$ erforderliche zeitliche Verlauf der Drehzahl $n_R$ des angetriebenen Rades 15 wird über die Signalleitung 17 einem Signaleingang 32 der Gewichtsermittlung 30 zugeführt. Über die Signalleitungen 23 schließlich wird einem Signaleingang 31 der Gewichtsermittlung 30 der Zeitpunkt mitgeteilt, zu dem die Kupplung 9 durch Steuersignale der Getriebesteuerung 18 getrennt ist. Auf diese Weise kann in der Gewichtsermittlung 30 zwischen solchen Zeiten, in denen das Fahrzeug dem Antrieb durch en Motor 6 unterliegt, und solchen Zeiten, in denen das Fahrzeug nicht dem Antrieb des motors 6 unterliegt, unterschieden werden. Zu diesen unterschiedlichen Zeiten werden auch die Beschleunigungsgrößen $\ddot{s}_{x2}$ und $\ddot{s}_{x1}$ gemessen bzw. bestimmt.

Die allgemeine Formel zur Ermittlung des Fahrzeuggewichtes G lautet :

$$G = M_{A1} - M_{A2}/f(\ddot{s}_{x1}) - f(\ddot{s}_{x2})$$

Werte mit Index 1 sind zum Zeitpunkt 1 und Werte mit Index 2 sind zum Zeitpunkt 2 ermittelt. Neben dem oben beschriebenen Sonderfall $M_A = 0$, der für die Schaltpause gilt, kann auch der Sonderfall f $(\ddot{s}_{x2}) = 0$ ausgewertet werden. Dieser gilt für unbeschleunigte Fahrt.

Die obige Gleichung kann auch allgemein, ohne die Sonderfälle abzuwarten, ausgewertet werden. Dabei ist darauf zu achten, daß die beiden Meßpunkte nicht zu weit auseinander liegen. Um jedoch eine ausreichende Genauigkeit für die Gewichtsgröße zu erhalten, sollte die Differenz der Antriebsmomente $M_{A1} - M_{A2}$ möglichst groß gewählt werden.

Die Gewichtsermittlung 30 kann auch so ausgebildet sein, daß verschiedene ermittelte Gewichtsgrößen G zur Bildung eines Mittelwertes für die Gewichtsgrößen verwendet werden und daß der Mittelwert der Gewichtsgrößen seinerseits zur Anzeige oder Bestimmung des Gewichtes des Fahrzeugs herangezogen wird. In diesem Fall wird also der Momenten-Kontrolleinrichtung 24 ein Gewichts-Mittelwert zugeführt.

Es können auch Mittel vorgesehen sein, die nur solche Gewichtsgrößen oder nur solche Mittelwerte der Gewichtsgrößen zur Auswertung kommen lassen, die eine vorgegebene Abweichung von einem vorgegebenen Wert oder einem früher ermittelten Wert der Gewichtsgrößen nicht überschreiten.

Um sicherzustellen, daß auch dann, wenn in der Auswerteeinrichtung 30 z. B. wegen zu kurzer Fahrzeit noch kein ausreichend genauer Wert für die Gewichtsgröße G vorliegt, in der Momenten-Kontrolleinrichtung 24 ein brauchbarer Wert für das stationäre Antriebsmoment $M_{stat}$ bestimmt werden kann, ist es vorteilhaft, statt der von der Auswerteeinrichtung 30 ermittelten Gewichtsgröße G zunächst eine mittlere Gewichtsgröße $G_O$ zu verwenden, die z. B. einem halbbeladenen Fahrzeug entspricht.

Für eine sichere Bestimmung und Berechnung der Gewichtsgröße G eignet sich in vorteilhafter Weise ein in der Gewichtsermittlung 30 vorgesehener Mikrocomputer, mit dem insbesondere auch die zeitabhängigen Rechenvorgänge bezüglich der Beschleunigungsgrößen auf einfache Weise realisiert werden können.

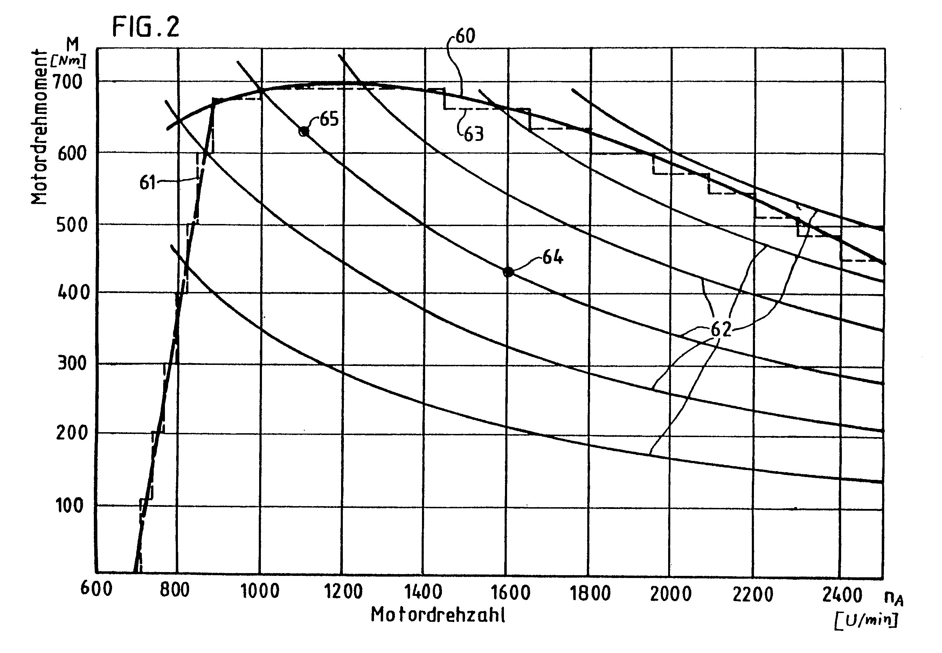

Das Diagramm nach Fig. 2 zeigt den typischen Verlauf einer Linie 60 für die maximalen Antriebsmomente, aufgetragen über der Motordrehzahl für einen Dieselmotor.

Die Linie 61 begrenzt das Feld möglicher Motorbetriebspunkte zu niedrigen Motordrehzahlen. Sie wird auch als Rundlaufgrenze bezeichnet, unterhalb der der Motor nicht mehr schwingungsfrei läuft. Die Hilfslinien 62 sind Hyperbeln und veranschaulichen, wohin der Motorbetriebspunkt wandert, wenn eine andere als die gerade gefahrene Getriebeübersetzung gewählt wird. Die gestrichelten Linien 63 stellen eine vereinfachte Nachbildung der in das Kriterium zum Erzeugen des Steuersignals eingehenden Kurvenläufe dar.

Es sei angenommen, daß der momentane Motorbetriebspunkt 64 vorhanden sei. Es sei ferner angenommen, daß sich aufgrund der vorhandenen Übersetzung beim Schalten in den Nächsthöheren Gang eine Differenzdrehzahl von 500 ergeben würde. Der neue Motorbetriebspunkt würde dann, unter der Voraussetzung, daß man mit gleicher Geschwindigkeit weiterfahren wollte, auf der gleichen Hyperbel im Punkt 65 liegen. Für diesen neuen Motorbetriebspunkt 65 wird nun, vor einer Umschaltung oder vor Abgabe einer Umschaltempfehlung, in der Vergleichseinrichtung 45 geprüft, ob dieser Motorbetriebspunkt oberhalb oder unterhalb der Linie 63 liegt.

Liegt dieser Punkt 65, wie im Diagramm dargestellt, unterhalb der Linie 63, kann in den neuen Gang umgeschaltet werden. Läge der Punkt 65 für den neuen Gang oberhalb der Linie 63, wird der neue Gang nicht geschaltet.

Der Vorteil des Vergleichens der Betriebpunkte mit den maximalen Grenzlinien ergibt sich dadurch, daß die Betriebspunkte 64 und 65 und die Linien 63 Punkte desselben Diagramms sind. Würden beispielsweise die Antriebsmomente der im Diagramm angegebenen Linie 60 für die maximalen Motormomente aufgrund irgendwelcher Einflüsse vom Motor nicht erreicht und um einen bestimmten Faktor kleiner sein, dann würde dieser Faktor auch für alle übrigen, unter anderem auch die Betriebspunkte 64 und 65 gelten. Das bedeutet dann, daß die Relation der Betriebspunkte 64 und 65 zur Linie 60 der maximalen Momente erhalten bliebe und die Vergleichseinrichtung 45 ein fehlerfreies, brauchbares Ergebnis liefert.

**Patentansprüche**

1. Kontrolleinrichtung für ein von einem Motor über ein die Übersetzung vorzugsweise stufenweise variierendes Getriebe angetriebenes Fahrzeug mit folgenden Merkmalen :

a) es ist ein Motor-Kennfeldspeicher (36) zur Ermittlung des vom Motor (6) abgegebenen momentanen Antriebsmomentes $M_A$ vorgesehen ;

b) es ist ein die Drehzahl $n_R$ wenigstens eines Fahrzeugrades (15) erfassender Sensor (16) vorgesehen, dessen Ausgangssignal einer Differenziereinrichtung zur Bestimmung einer aus dem zeitlichen Verlauf der Drehzahl des Fahrzeugrades (15) abgeleiteten Beschleunigungsgröße š zugeführt werden kann ;

c) es ist eine Gewichtsermittlung (30) zur Berechnung des Fahrzeuggewichts unter Zuhilfenahme des momentanen Antriebsmomentes $M_A$ und der Beschleunigungsgröße š vorgesehen ;

d) es ist Momenten-Kontrolleinrichtung (24) zur Berechnung eines stationären Antriebsmomentes $M_{stat}$, das zur beschleunigungslosen Fahrt erforderlich ist, unter Zuhilfenahme des momentanen Momentes $M_A$, des Fahrzeuggewichts G und der Beschleunigung š vorgesehen ;

e) es ist eine Getriebesteuerung (18) vorgesehen, die für den beabsichtigten neuen Gang das stationäre Moment $M'_{stat}$ mit dem maximalen und dem zuträglichen Moment des Motors vergleicht und ein Steuersignal (46) zum Sperren einer Gangumschaltsteuerung (50) abgibt, wenn das maximale oder das zuträgliche Moment überschritten wird ;

f) die Getriebesteuerung (18) enthält eine Vergleichseinrichtung (45), die zur Speicherung der maximalen oder zuträglichen Momente des Motors dient.

2. Kontrolleinrichtung nach Anspruch 1, gekennzeichnet durch folgende Merkmale :

a) es ist ein die Drehzahl $n_A$ des Motors (6) erfassender Sensor (7) vorgesehen ;

b) es ist ein Geber (1) zur Erzeugung einer Motor-Steuergröße y vorgesehen ;

c) der Motor-Kennfeldspeicher (36) enthält, eine Kennlinienschar, die die gegenseitige Abhängigkeit von Motor-Drehzahl $n_A$, Motor-Steuergröße y und momentanem Moment $M_A$ wiedergibt ;

d) ein Signalausgang (35) des Motor-Kennfeldspeichers (36) ist mit einem dem momentanen Moment $M_A$ zugeordneten Signaleingang (27) der Momenten-Kontrolleinrichtung (24) verbunden ;

3. Kontrolleinrichtung nach Anspruch 2 für ein Fahrzeug mit einem als Brennkraftmaschine ausgebildeten Motor (6), der über ein Gaspedal gesteuert wird, dadurch gekennzeichnet, daß der Geber (1) als Gaspedal ausgebildet ist.

4. Kontrolleinrichtung nach wenigstens einem der Ansprüche 1 bis 3, dadurch gekennzeichnet, daß :

a) die Gewichtsermittlung (30) unter Verwertung des momentanen Momentes $M_A$ und mehrerer, zu verschiedennen Zeitpunkten $X_1$, $X_2$ ermittelter Werte der Beschleunigungsgröße š eine dem Gewicht des Fahrzeugs entsprechende Gewichtsgröße G nach der Formel

$$G = M_A/f(š_{X2}) - f(š_{X1})$$

b) ermittelt ; wobei wenigstens einer der von der Gewichtsermittlung (30) zu verwentenden Werte der Beschleunigungsgröße š zu einem Zeitpunkt ermittelt wird, in dem das Fahrzeug dem Antrieb durch den Motor (6) unterliegt, und wobei wenigstens einer der von der Gewichtsermittlung (30) zu verwertenden Werte der Beschleunigungsgröße š zu einem Zeitpunkt ermittelt wird, in dem sich das Fahrzeug in einem antriebslosen Zustand befindet.

5. Kontrolleinrichtung nach Anspruch 4 für ein Fahrzeug mit einer Kupplung zur Trennung der angetriebenen Fahrzeugräder vom Antriebsstrang des Fahrzeugs, gekennzeichnet durch folgende Merkmale :

a) die Kupplung (9) ist mit einem Steuereingang (10) zum Steuern der Kupplungsbetätigung versehen ;

b) der Steuereingang der Kupplung (9) ist mit einem Steuerausgang (22) der Getriebesteuerung (18) verbunden ;

c) die Getriebesteuerung (18) erzeugt dann ein Steuersignal zur Trennung der Kupplung (9), wenn der dem antriebslosen Zustand des Fahrzeugs zugeordnete Wert des Beschleunigungsgröße š ermittelt wird.

6. Kontrolleinrichtung nach Anspruch 4, dadurch gekennzeichnet, daß die Ermittlung der Gewichtsgröße G wiederholt vorgenommen wird.

7. Kontrolleinrichtung nach Anspruch 6, dadurch gekennzeichnet, daß verschiedene ermittelte Gewichtsgrößen G zur Bildung eines Mittelwertes für die Gewichtsgröße G verwendet werden und daß dieser Mittelwert zur Anzeige oder Bestimmung des Gewichts des Fahrzeugs herangezogen wird.

8. Kontrolleinrichtung nach Anspruch 6 bis 7, dadurch gekennzeichnet, daß Mittel vorgesehen sind, die nur solche Gewichtsgrößen G oder nur solche Mittelwerte der Gewichtsgrößen G zur Auswertung kommen lassen, die eine vorgegebene Abweichung von einem vorgegebenen Wert oder einem früher ermittelten Wert der Gewichtsgrößen G nicht überschreiten.

9. Kontrolleinrichtung nach Anspruch 6 bis 8, dadurch gekennzeichnet, daß insbesondere nach einer Veränderung des Fahrzeuggewichts für die erste Ermittlung der Gewichtsgrößen G ein festgelegter vorgegebener Wert der Gewichtsgrößen G herangezogen wird.

10. Kontrolleinrichtung nach wenigstens einem der Ansprüche 1 bis 9, dadurch gekennzeichnet, daß die Momenten-Kontrolleinrichtung (24) eine Recheneinrichtung zur Berechnung der Differenz zwischen dem momentanen Antriebsmoment $M_A$ und dem Produkt aus Gewichtsgröße G und Beschleunigungsgröße š nach der Formel :

$$M_{stat} = M_A - G \cdot f(š)$$

enthält.

11. Kontrolleinrichtung nach wenigstens einem der Ansprüche 1 bis 10, dadurch gekennzeichnet, daß das stationäre Antriebsmoment $M_{stat}$ ständig ermittelt wird.

12. Kontrolleinrichtung nach wenigstens einem der Ansprüche 1 bis 11, dadurch gekennzeichnet, daß das stationäre Antriebsmoment $M_{stat}$ für weitere Gänge unter Berücksichtigung der Getriebe-Übersetzung nach der Formel

$$M'_{stat} = M_{stat} \cdot i/i \text{ (neu)}$$

berechnet wird, wobei bedeuten :

$M'_{stat}$ = stationäres Moment im neuen Gang
i = Übersetzung im alten Gang
i (neu) = Übersetzung im neuen Gang

13. Kontrolleinrichtung nach Anspruch 11, dadurch gekennzeichnet, daß die maximalen und zuträglichen Momentenlinien (60, 61) über den Drehzahlbereich abschnittsweise als konstante Momentenwerte gespeichert sind.

14. Kontrolleinrichtung nach wenigstens einem der Ansprüche 1 bis 13, dadurch gekennzeichnet, daß die Werte der maximalen und zuträglichen Antriebsmomente abgestimmt sind auf die im Motor-Kennfeldspeicher (36) gespeicherten Werte.

15. Kontrolleinrichtung nach wenigstens einem der vorhergehenden Ansprüche, dadurch gekennzeichnet, daß ein Sperrelement (47) vorgesehen ist, das das Einlegen eines neuen Ganges verhindert, wenn die in der Vergleichseinrichtung (45) festgestellte Differenz zwischen der jeweiligen stationären Antriebsgröße $M'_{stat}$ und den maximal vorhandenen oder zuträglichen Momentenwerten einen vorgegebenen Betrag über- oder unterschreitet.

16. Kontrolleinrichtung nach den Ansprüchen 1 bis 15, dadurch gekennzeichnet, daß zur Ausführung der Berechnungen mindestens ein Mikrocomputer verwendet wird.

## Claims

1. Control device for a vehicle driven by a motor by way of a transmission that preferably changes the transmission ratio in steps, which device has the following features :

a) there is provided a store (36) recording the characteristics of the motor for ascertaining the instantaneous driving torque $M_A$ delivered by the motor (6) ;

b) there is provided a sensor (16) registering the number of revolutions per minute $n_R$ of at least one vehicle wheel (15) of which the output signal can be fed to a differentiating device for ascertaining a magnitude $\bar{s}$ of acceleration derived from the variation with time of the number of revolutions per minute of the vehicle wheel (15),

c) there is provided a weight-assessment means (30) for calculating the weight of the vehicle from the instantaneous driving torque $M_A$ and the magnitude $\bar{s}$ of acceleration ;

d) there is provided a torque-control device (24) for calculating a steady driving torque $M_{stat}$, which is necessary for driving the vehicle without acceleration, from the instantaneous torque $M_A$, the vehicle weight G and the magnitude $\bar{s}$ of acceleration ;

e) there is provided a transmission-control means (18) which, for the intended new gear, compares the steady torque $M'_{stat}$ with the maximum and the optimum torque of the motor and releases a control signal (46) for blocking a gear shift control (50) if the maximum or the optimum torque is exceeded ;

f) the transmission-control means (18) contains a comparison device (45) which serves to store the maximum or optimum torques of the motor.

2. Control device according to claim 1, characterised by the following features :

a) there is provided a sensor (7) registering the number of revolutions per minute $n_A$ of the motor (6) ;

b) there is provided a transmitter (1) for producing a motor-control magnitude y ;

c) the store (36) recording the characteristics of the motor contains a family of characteristics which represents the relationship between the number of revolutions per minute $n_A$ of the motor, the motor-control magnitude y and the instantaneous torque $M_A$ ;

d) a signal output (35) of the store (36) recording the characteristics of the motor is connected to a signal input (27) of the torque-control device (24) associated with the instantaneous torque $M_A$.

3. Control device according to claim 2 for a vehicle with a motor (6), in the form of an internal combustion engine, which is controlled by an accelerator pedal, characterised in that the transmitter (1) is formed as an accelerator pedal.

4. Control device according to at least one of claims 1 to 3, characterised in that

a) the weight-assessment means (30), using the instantaneous torque $M_A$ and several values of the acceleration magnitude $\bar{s}$ ascertained at different times $X_1$, $X_2$, determines a weight magnitude G corresponding to the weight of the vehicle in accordance with the formula

$$G = M_A/f(\ddot{s}_{X2}) - f(\ddot{s}_{X1})$$

b) at least one of the values of the acceleration magnitude $\ddot{s}$ to be used by the weight-assessment means (30) being ascertained at a point in time at which the vehicle is being driven by the motor (6), and at least one of the values of the acceleration magnitude $\ddot{s}$ to be used by the weight-assessment means (30) being ascertained at a point in time at which the vehicle is not being driven by the motor.

5. Control device according to claim 4 for a vehicle with a clutch for disengaging the driven vehicle wheels from the drive line of the vehicle, characterised by the following features :

a) the clutch (9) is provided with a control input (10) for controlling the operation of the clutch ;

b) the control input of the clutch (9) is connected to a control output (22) of the transmission-control means (18) ;

c) the transmission-control means (18) produces a control signal for disengaging the clutch (9) while the value of the acceleration magnitude $\ddot{s}$ associated with the non-driven state of the vehicle is ascertained.

6. Control device according to claim 4, characterised in that the weight magnitude G is repeatedly ascertained.

7. Control device according to claim 6, characterised in that the different weight magnitudes G ascertained are used to obtain a mean value for the weight magnitude G and this mean value is used to indicate or determine the weight of the vehicle.

8. Control device according to claims 6 to 7, characterised in that means are provided that permit use only of those weight magnitudes G or of those mean values of the weight magnitudes G that do not exceed a predetermined deviation from a predetermined value or from a previously ascertained value of the weight magnitudes G.

9. Control device according to claims 6 to 8, characterised in that especially after a change in the weight of the vehicle, a fixed predetermined value of the weight magnitudes G is used for the first assessment of the weight magnitude G.

10. Control device according to a least one of claims 1 to 9, characterised in that the torque-control device (24) contains a calculating device for calculating the difference between the instantaneous driving torque $M_A$ and the product of the weight magnitude G and the acceleration magnitude $\ddot{s}$ in accordance with the formula :

$$M_{stat} = M_A - G \cdot f(\ddot{s})$$

11. Control device according to at least one of claims 1 to 10, characterised in that the steady driving torque $M_{stat}$ is continually ascertained.

12. Control device according to at least one of claims 1 to 11, characterised in that the steady driving torque $M_{stat}$ is calculated for other gears, taking into account the transmission ratio, in accordance with the formula

$$M'_{stat} = M_{stat} \cdot i/i \text{ (new)}$$

in which

$M'_{stat}$ = steady torque in the new gear
$i$ = transmission ratio of the old gear
$i$ (new) = transmission ratio of the new gear.

13. Control device according to claim 1, characterised in that the maximum and optimum torque lines (60, 61) are stored in portions of constant torque values with reference to a range of numbers of revolutions per minute.

14. Control device according to at least one of the claims 1 to 13, characterised in that the values of the maximum and optimum driving torques are coordinated with the values stored in the store (36) recording the characteristics of the motor.

15. Control device according to at least one of the preceding claims, characterised in that a blocking element (47) is provided which prevents the engagement of a new gear if the difference ascertained by the comparison device (45) between the respective steady driving torque $M'_{stat}$ and the maximum or optimum torque values exceeds or falls below a predetermined amount.

16. Control device according to claims 1 to 15, characterised in that at least one microcomputer is used to carry out the calculations.

**Revendications**

1. Dispositif de commande d'un véhicule propulsé par un moteur via une transmission présentant de préférence une variation discontinue, caractérisé en ce que :

a) une mémoire (36) de réseau de caractéristiques du moteur est prévue pour la détermination du couple instantané $M_A$ délivré par le moteur (6) ;

b) un capteur (16) décelant la vitesse de rotation $n_R$ d'une roue (15) du véhicule au moins est prévu, dont le signal de sortie peut être appliqué à un différentiateur pour la détermination d'une grandeur d'accélération š dérivée de la variation temporelle de la vitesse de rotation de la roue (15) du véhicule ;

c) un dispositif traducteur (30) est prévu pour le calcul du poids du véhicule à l'aide du couple instantané $M_A$ et de la grandeur d'accélération š ;

d) un dispositif de contrôle du couple (24) est prévu pour le calcul d'un couple stationnaire $M_{stat}$ nécessaire pour un déplacement sans accélération, à l'aide du couple instantané $M_A$, du poids G du véhicule et de la grandeur d'accélération š ;

e) une commande (18) de la boîte de vitesses est prévue, qui compare pour la nouvelle vitesse envisagée le couple stationnaire $M'_{stat}$ au couple maximal et au couple transmissible du moteur puis délivre un signal de commande (46) pour le blocage d'une commande (50) de changement de vitesse en cas de dépassement du couple maximal ou transmissible ; et

f) la commande (18) de la boîte de vitesses comprend un comparateur (45) servant à la mémorisation des couples maximaux ou transmissibles du moteur.

2. Dispositif de commande selon revendication 1, caractérisé en ce que :

a) un capteur (7) est prévu pour déceler la vitesse de rotation $n_A$ du moteur (6) ;

b) un transmetteur (1) est prévu pour délivrer une grandeur de commande y du moteur ;

c) la mémoire (36) du réseau de caractéristiques du moteur contient une famille de courbes représentant la relation entre la vitesse de rotation $n_A$ du moteur, la grandeur de commande y du moteur et le couple instantané $M_A$ ;

d) une sortie de signal (35) de la mémoire (36) du réseau de caractéristiques du moteur est reliée à une entrée de signal (27) du dispositif de contrôle du couple (24) affectée au couple instantané $M_A$.

3. Dispositif de commande selon revendication 2, destiné à un véhicule équipé d'un moteur (6) à combustion interne commmandé par une pédale d'accélération, ledit dispositif étant caractérisé en ce que le transmetteur (1) est réalisé sous forme d'une pédale d'accélération.

4. Dispositif de commande selon une quelconque des revendications 1 à 3, caractérisé en ce que :

a) Le dispositif traducteur (30) détermine, à l'aide du couple instantané $M_A$ et de plusieurs valeurs de la grandeur d'accélération š déterminées à des instants différents $X_1$, $X_2$, une grandeur de poids G correspondant au poids du véhicule selon la formule :

$$G = M_A/f(š_{X2}) - f(š_{X1})$$

et

b) une au moins des valeurs de la grandeur d'accélération š à traduire par le dispositif (30) est déterminée à un instant où le véhicule est propulsé par le moteur (6), et une au moins des valeurs de la grandeur d'accélération š à traduire par le dispositif (30) est déterminée à un instant où le véhicule n'est pas propulsé.

5. Dispositif de commande selon revendication 4, destiné à une véhicule équipé d'un embrayage isolant les roues motrices de la chaîne cinématique, ledit dispositif étant caractérisé en ce que :

a) l'embrayage (9) est muni d'une entrée (10) pour la commande de son actionnement ;

b) l'entrée de commande de l'embrayage (9) est reliée à une sortie de commande (22) de la commande (18) de la boîte de vitesses ; et

c) la commande (18) de la boîte de vitesse délivre un signal de commande pour l'isolement de l'embrayage (9) quand la valeur de la grandeur d'accélération š affectée à l'état non propulsé du véhicule est déterminée.

6. Dispositif de commande selon revendication 4, caractérisé en ce que la détermination de la grandeur de poids G est répétée.

7. Dispositif de commande selon revendication 6, caractérisé en ce que diverses grandeurs de poids G déterminées sont utilisées pour la formation d'une valeur moyenne de la grandeur de poids G ; et la valeur moyenne est utilisée pour l'indication ou la détermination du poids du véhicule.

8. Dispositif de commande selon revendications 6 et 7, caractérisé par des moyens qui provoquent uniquement la traduction des grandeurs de poids G ou de valeurs moyennes de ces dernières ne dépassant pas un écart prédéterminé par rapport à une valeur prédéterminée ou à une valeur précédemment déterminée des grandeurs de poids G.

9. Dispositif de commande selon revendications 6 à 8, caractérisé en ce qu'une valeur prédéterminée fixe des grandeurs de poids G est utilisée pour la première détermintion des grandeurs de poids G, en particulier après une variation du poids du véhicule.

10. Dispositif de commande selon une quelconque des revendications 1 à 9, caractérisé en ce que le dispositif de contrôle du couple (24) comprend un dispositif de calcul de la différence entre le couple instantané $M_A$ et le produit de la grandeur de poids G par la grandeur d'accélération š selon la formule :

$$M_{stat} = M_A - G \cdot f(\check{s})$$

11. Dispositif de commande selon une quelconque des revendications 1 à 10, caractérisé par une détermination permanente du couple stationnaire $M_{stat}$.

12. Dispositif de commande selon une quelconque des revendications 1 à 11, caractérisé en ce que le couple stationnaire $M_{stat}$ est calculé pour d'autres vitesses, compte tenu du rapport de la boîte, selon la formule :

$$M'_{stat} = M_{stat} \cdot i/i \text{ (nouveau)}$$

avec :

$M'_{stat}$ = couple stationnaire à la nouvelle vitesse
$i$ = rapport à l'ancienne vitesse
$i$ (nouveau) = rapport à la nouvelle vitesse.

13. Dispositif de commande selon revendication 1, caractérisé en ce que les courbes de couple maximal et de couple transmissible (60, 61) sont mémorisées par secteurs sur la plage de vitesse de rotation, sous forme de valeurs constantes du couple.

14. Dispositif de commande selon une quelconque des revendications 1 à 13, caractérisé en ce que les valeurs des couples maximal et transmissible sont adaptées aux valeurs rangées dans la mémoire (36) du réseau de caractéristiques du moteur.

15. Dispositif de commande selon une quelconque des revendications 1 à 14, caractérisé par un élement de blocage (47) qui interdit le passage d'une nouvelle vitesse quand la différence entre le couple stationnaire $M'_{stat}$ et les valeurs du couple maximal ou transmissible, déterminée par le comparateur (45), dépasse dans un sens ou dans l'autre une valeur absolue prédéterminée.

16. Dispositif de commande selon revendications 1 à 15, caractérisé par l'emploi d'au moins un micro-ordinateur pour l'exécution des calculs.

FIG.1

FIG.2

Motordrehmoment M [Nm]

Motordrehzahl  $n_A$  [U/min]

0 120 189